# EUROPÄISCHE PATENTANMELDUNG

(11) **EP 3 018 319 A1**
(43) Veröffentlichungstag der Anmeldung: **11.05.2016**
(21) Anmeldenummer: 15188096.0
(22) Anmeldetag: 02.10.2015
(51) Int. Cl.: F02B 47/02, F02M 25/028, F02F 1/24

(54) **ZYLINDERKOPFANORDNUNG FÜR EINEN VERBRENNUNGSMOTOR**

(30) Priorität: 04.11.2014 DE 102014222472
(71) Anmelder: Bayerische Motoren Werke Aktiengesellschaft, 80809 München (DE)
(72) Erfinder: Durst, Dr. Bodo, 80993 München (DE); Kern, Dr. Wolfgang, 81477 Muenchen (DE)

(57) **Zusammenfassung**

Die Erfindung betrifft eine Zylinderkopfanordnung (2) für einen Verbrennungsmotor (1), insbesondere eines Kraftfahrzeugs, aufweisend wenigstens einen Zylinderkopf (3) mit zumindest einem Einlasskanal (4), über den Verbrennungsluft in einen Brennraum (5) des Verbrennungsmotors (1) einleitbar ist. Um die Kühlwirkung beim Einspritzen eines Kühlfluids (7) in einen Verbrennungsmotor (1) zu verbessern, wird mit der Erfindung vorgeschlagen, dass die Zylinderkopfanordnung (2) wenigstens ein an dem Zylinderkopf (3) angeordnetes Einspritzventil (6) zum Einspritzen eines Kühlfluids (7) unmittelbar in den Einlasskanal (4) aufweist.

## Beschreibung

Die Erfindung betrifft eine Zylinderkopfanordnung für einen Verbrennungsmotor, insbesondere eines Kraftfahrzeugs, aufweisend wenigstens einen Zylinderkopf mit zumindest einem Einlasskanal, über den Verbrennungsluft in einen Brennraum des Verbrennungsmotors einleitbar ist.

Des Weiteren betrifft die Erfindung einen Verbrennungsmotor, insbesondere für ein Kraftfahrzeug.

Ferner betrifft die Erfindung ein Verfahren zum Betreiben eines Verbrennungsmotors, insbesondere eines Kraftfahrzeugs.

Aufgeladene Verbrennungsmotoren sind üblicherweise im Bereich hoher Lasten stark klopfbegrenzt. Um ein Klopfen des Verbrennungsmotors zu verhindern, kann ein Zündwinkel von seinem für den Betrieb des Verbrennungsmotors optimalen Wert nach "Spät" verschoben werden. Hierdurch verschlechtert sich jedoch der Wirkungsgrad der in dem Verbrennungsmotor erfolgenden Verbrennung. Dadurch erhöht sich der Kraftstoffverbrauch des Verbrennungsmotors, was mit einer erhöhten Schadstoffemission einhergeht. Zudem verringert sich die Leistung des Verbrennungsmotors und ein erhöhter Kühlleistungsbedarf entsteht. Des Weiteren steigt die Abgastemperatur an, so dass zum Schutz von Bauteilen im Abgassystem eines Kraftfahrzeugs eventuell eine Anfettung erfolgen muss.

Durch eine Einspritzung eines Kühlfluids in eine dem Verbrennungsmotor vorgeschaltete Sauganlage kann eine Zylinderladung in einem Brennraum des Verbrennungsmotors gekühlt werden, wodurch die Klopfneigung des Verbrennungsmotors verringerbar ist. Ein Zündwinkel kann dann in Richtung "Früh" verstellt werden, wodurch der Kraftstoffverbrauch und die damit einhergehenden Schadstoffemissionen verringert werden. Die Leistung des Verbrennungsmotors wird gesteigert und die Abgastemperatur reduziert.

Aufgabe der Erfindung ist es, die Kühlwirkung beim Einspritzen eines Kühlfluids in einen Verbrennungsmotor zu verbessern.

Diese Aufgabe wird durch die unabhängigen Ansprüche gelöst. Vorteilhafte Ausgestaltungen sind insbesondere in den abhängigen Ansprüchen wiedergegeben, die jeweils für sich genommen oder in unterschiedlicher Kombination miteinander einen Aspekt der Erfindung darstellen können.

Die erfindungsgemäße Zylinderkopfanordnung für einen Verbrennungsmotor, insbesondere eines Kraftfahrzeugs, umfasst wenigstens einen Zylinderkopf mit zumindest einem Einlasskanal, über den Verbrennungsluft in einen Brennraum des Verbrennungsmotors einleitbar ist, und wenigstens ein an dem Zylinderkopf angeordnetes Einspritzventil zum Einspritzen eines Kühlfluids unmittelbar in den Einlasskanal.

Gemäß der Erfindung wird das Kühlfluid nicht in eine dem Verbrennungsmotor vorgeschaltete Sauganlage sondern unmittelbar in den Einlasskanal eingespritzt. Bei einem herkömmlichen Einspritzen des Kühlfluids in die Sauganlage trifft ein großer Teil des Kühlfluids auf Wände der Sauganlage und eventuell der Einspritzkanäle des Zylinderkopfes und schlägt sich dort nieder. Hierdurch kann dieser Teil nicht mehr zur Kühlung einer Zylinderladung in einem Brennraum des Verbrennungsmotors zur Verfügung stehen. Um dennoch eine optimale Kühlung der Zylinderladung zu erhalten, muss herkömmlich die Menge an eingespritztem Kühlfluid erhöht werden. Dies ist nachteilig, da hierzu eine relativ große Menge an Kühlfluid im Kraftfahrzeug bevorratet bzw. erzeugt werden muss.

Durch die erfindungsgemäße Einspritzung des Kühlfluids unmittelbar in den Einlasskanal kann das Kühlfluid bei geöffnetem Einlassventil an dem Einlasskanal während eines Ansaugtaktes, also saugsynchron, zusammen mit Verbrennungsluft in den Brennraum eingesaugt werden. Hierdurch gelangt nahezu das gesamte unmittelbar in den Einlasskanal eingespritzte Kühlfluid in Form von beim Einspritzen entstehenden Tröpfchen in den Brennraum, wobei eine zur Steigerung der Kühleffektivität optimale Durchmischung der Tröpfchen mit der in dem Brennraum befindlichen Zylinderladung erfolgt. Dies geht mit einer optimalen und insbesondere deutlich verbesserten Kühleffektivität einher. Hierdurch kann die Menge an eingespritztem Kühlfluid reduziert werden, was mit einem verbesserten Kühlfluidhaushalt verbunden ist.

Die Kühleffektivität kann sich erhöhen, je näher das Einspritzventil an einem an dem Einlasskanal angeordneten Einlassventil angeordnet ist. Je näher das Einspritzventil an dem Einlassventil angeordnet ist, desto größer kann ein von dem Einspritzventil erzeugter Sprühkegelwinkel gewählt werden, um eine optimale Durchmischung von Kühlfluid und Zylinderladung in dem Brennraum herbeizuführen.

Die erfindungsgemäße Zylinderkopfanordnung kann auch zwei oder mehrere an dem Zylinderkopf angeordnete Einspritzventile aufweisen, mit denen das Kühlfluid unmittelbar in einen einzigen Einlasskanal einspritzbar ist. Die Einspritzventile können bezüglich des Einlasskanals axial und/oder umfangsversetzt zueinander angeordnet sein.

Als Kühlfluid kann beispielsweise Wasser verwendet werden. Das Wasser kann beispielsweise einem Tank entnommen werden, der mit an einem Verdampfer einer Klimaanlage des Kraftfahrzeugs kondensiertem Wasser gespeist wird.

Der Zylinderkopf der erfindungsgemäßen Zylinderkopfanordnung kann auch zwei oder mehrere Einlasskanäle aufweisen, über die Verbrennungsluft in jeweils einen Brennraum des Verbrennungsmotors einleitbar ist. An dem Zylinderkopf kann für jeden Einlasskanal wenigstens ein Einspritzventil zum Einspritzen des Kühlfluids in den jeweiligen Einlasskanal angeordnet sein.

Gemäß einer vorteilhaften Ausgestaltung ist das Einspritzventil zumindest teilweise in einer in den Einlasskanal mündenden, radial außen zu dem Einlasskanal angeordneten Aufnahme des Zylinderkopfes angeordnet. Die Aufnahme kann als Bohrung ausgebildet sein, die quer zu zumindest dem Abschnitt des Einlasskanals verläuft, in den sie unmittelbar mündet.

Nach einer weiteren vorteilhaften Ausgestaltung ist das Einspritzventil derart an dem Zylinderkopf angeordnet und ausgebildet, dass zumindest ein Teil des eingespritzten Kühlfluids durch einen Ventilspalt eines an dem Einlasskanal angeordneten, geöffneten Einspritzventils des Verbrennungsmotors direkt in den Brennraum einspritzbar ist. Durch diese zumindest teilweise Direkteinspritzung des Kühlfluids in den Brennraum können beim Einspritzen mittels des Einspritzventils erzeugte Tröpfchen des Kühlfluids direkt in den Brennraum fliegen, um ihre optimale Kühlwirkung zu entfalten.

Der erfindungsgemäße Verbrennungsmotor, insbesondere für ein Kraftfahrzeug, umfasst wenigstens eine Zylinderkopfanordnung nach einer der vorgenannten Ausgestaltungen oder einer beliebigen Kombination derselben.

Mit dem Verbrennungsmotor sind die oben mit Bezug auf die Zylinderkopfanordnung genannten Vorteile entsprechend verbunden. Der Verbrennungsmotor kann ein aufgeladener Ottomotor oder Dieselmotor sein.

Gemäß dem erfindungsgemäßen Verfahren zum Betreiben eines Verbrennungsmotors, insbesondere eines Kraftfahrzeugs, wird während wenigstens eines Ansaugtaktes ein Kühlfluid unmittelbar in einen Einlasskanal eines Zylinderkopfes des Verbrennungsmotors eingespritzt.

Mit dem Verfahren sind die oben mit Bezug auf die Zylinderkopfanordnung genannten Vorteile entsprechend verbunden. Insbesondere ist das Verfahren mit der Zylinderkopfanordnung durchführbar.

Gemäß einer vorteilhaften Ausgestaltung wird zumindest ein Teil des eingespritzten Kühlfluids durch einen Ventilspalt eines an dem Einlasskanal angeordneten, geöffneten Einspritzventils des Verbrennungsmotors direkt in einen Brennraum des Verbrennungsmotors eingespritzt. Mit dieser Ausgestaltung sind die oben mit Bezug auf die entsprechende Ausgestaltung der Zylinderkopfanordnung genannten Vorteile entsprechend verbunden.

Weitere Einzelheiten, Merkmale und Vorteile der Erfindung ergeben sich aus der nachfolgenden Beschreibung und der Figur. Es zeigt:

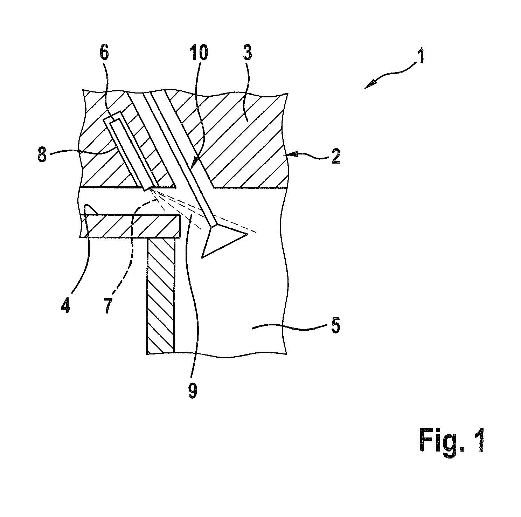

- Figur 1: eine schematische Darstellung eines Ausführungsbeispiels für einen erfindungsgemäßen Verbrennungsmotor.

Figur 1 zeigt eine schematische Darstellung eines Ausführungsbeispiels für einen erfindungsgemäßen Verbrennungsmotor 1 eines nicht weitergehender dargestellten Kraftfahrzeugs.

Der Verbrennungsmotor 1 umfasst eine Zylinderkopfanordnung 2. Die Zylinderkopfanordnung 2 weist einen Zylinderkopf 3 mit zumindest einem Einlasskanal 4 auf, über den Verbrennungsluft in den gezeigten Brennraum 5 des Verbrennungsmotors 1 einleitbar ist. Des Weiteren umfasst die Zylinderkopfanordnung 2 wenigstens ein an dem Zylinderkopf 3 angeordnetes Einspritzventil 6 zum Einspritzen eines Kühlfluids 7 unmittelbar in den gezeigten Einlasskanal 4.

Das Einspritzventil 6 ist zumindest teilweise in einer in den Einlasskanal 4 mündenden, radial außen zu dem Einlasskanal 4 angeordneten Aufnahme 8 des Zylinderkopfes 3 angeordnet. Das Einspritzventil 6 ist derart an dem Zylinderkopf 3 angeordnet und ausgebildet, dass zumindest ein Teil des eingespritzten Kühlfluids 7 durch einen Ventilspalt 9 eines an dem Einlasskanal 4 angeordneten, geöffneten Einspritzventils 10 des Verbrennungsmotors 1 direkt in den Brennraum 5 einspritzbar ist.

### Bezugszeichenliste:

- 1: Verbrennungsmotor
- 2: Zylinderkopfanordnung
- 3: Zylinderkopf
- 4: Einlasskanal
- 5: Brennraum
- 6: Einspritzventil
- 7: Kühlfluid
- 8: Aufnahme
- 9: Ventilspalt
- 10: Einlassventil

## Patentansprüche

1. Zylinderkopfanordnung (2) für einen Verbrennungsmotor (1), insbesondere eines Kraftfahrzeugs, aufweisend wenigstens einen Zylinderkopf (3) mit zumindest einem Einlasskanal (4), über den Verbrennungsluft in einen Brennraum (5) des Verbrennungsmotors (1) einleitbar ist, **gekennzeichnet durch** wenigstens ein an dem Zylinderkopf (3) angeordnetes Einspritzventil (6) zum Einspritzen eines Kühlfluids (7) unmittelbar in den Einlasskanal (4).

2. Zylinderanordnung (2) nach Anspruch 1, **dadurch gekennzeichnet, dass** das Einspritzventil (6) zumindest teilweise in einer in den Einlasskanal (4) mündenden, radial außen zu dem Einlasskanal (4) angeordneten Aufnahme (8) des Zylinderkopfes (3) angeordnet ist.

3. Zylinderanordnung (2) nach Anspruch 1 oder 2, **dadurch gekennzeichnet, dass** das Einspritzventil (6) derart an dem Zylinderkopf (3) angeordnet und ausgebildet ist, dass zumindest ein Teil des eingespritzten Kühlfluids (7) durch einen Ventilspalt (9) eines an dem Einlasskanal (4) angeordneten, geöffneten Einspritzventils (10) des Verbrennungsmotors (1) direkt in den Brennraum (5) einspritzbar ist.

4. Verbrennungsmotor (1), insbesondere für ein Kraftfahrzeug, **gekennzeichnet durch** wenigstens eine Zylinderkopfanordnung (2) nach einem der Ansprüche 1 bis 3.

5. Verfahren zum Betreiben eines Verbrennungsmotors (1), insbesondere eines Kraftfahrzeugs, **dadurch gekennzeichnet, dass** während wenigstens eines Ansaugtaktes ein Kühlfluid (7) unmittelbar in einen Einlasskanal (4) eines Zylinderkopfes (3) des Verbrennungsmotors (1) eingespritzt wird.

6. Verfahren nach Anspruch 5, **dadurch gekennzeichnet, dass** zumindest ein Teil des eingespritzten Kühlfluids (7) durch einen Ventilspalt (9) eines an dem Einlasskanal (4) angeordneten, geöffneten Einspritzventils (10) des Verbrennungsmotors (1) direkt in einen Brennraum (5) des Verbrennungsmotors (1) eingespritzt wird.
